# EUROPEAN PATENT APPLICATION

(11) **EP 4 534 393 A1**
(43) Date of publication of application: **09.04.2025**
(21) Application number: 24204774.4
(22) Date of filing: 04.10.2024
(51) Int. Cl.: B62D 25/18

(54) **SPLASH GUARD FOR HEAVY VEHICLES MUDGUARD**

(30) Priority: 06.10.2023 IT 202300020739
(71) Applicant: BAWER S.P.A., 75100 Matera (MT) (IT)
(72) Inventor: LORUSSO, PASQUALE, 70122 ALTAMURA (IT); SARDONE, AGOSTINO, 70122 ALTAMURA (IT)
(74) Representative: Russo, Dimitri

(57) **Abstract**

The present invention relates to a splash guard for heavy vehicles mudguards, covered in its internal part by a prominent flow-breaking barrier formed of a determined and ordered sequence of short and tall columns, said splash guard consisting of an external flat bulkhead and provided at its lateral ends with curved profiles and a slightly undulating flap to be inserted, the geometrical dimensions of the curved profiles and the dimensions of the short and tall columns being expressed as a function of a single dimensional parameter.

## Description

The present patent for industrial invention concerns a splash guard for heavy vehicles mudguards, which is mounted by means of a quick coupling and, in conditions of wet road surfaces, is capable of absorbing a substantial part of the energy of the liquid thrown up by the rolling tyre.

It is widely acknowledged that the current requirements for splash guards on heavy vehicles state that, in the case of vehicles with multiple axes where the distance "d" between the tyres of adjacent axles is less than 250 mm, splash guards must be fitted only on the rear wheels, whereas, when the distance "d" is equal to or exceeds 250 mm, a splash guard must be fitted at the rear of each wheel.

Regulations on the compulsory use of mudguards on heavy vehicles represent one of a series of precautionary measures aimed at enhancing road safety, both for heavy vehicles drivers and for mobility in general.

The function of heavy vehicles splash guards is to limit the amount of water thrown up by the tyres onto the road, both to the rear and to the side of the vehicle, with the aim of avoiding the phenomenon of water spray, which would reduce the visibility of vehicles travelling behind. Furthermore, heavy vehicles splash guards are designed to prevent small objects from being thrown up by the tyres towards other vehicles travelling on the same road.

In addition to their role in ensuring safety, the effective functioning of splash guards contributes to maintaining the cleanliness of vehicles for extended periods, helping, in turn, to preserve the integrity of vehicle components, including the muffler and other installed accessories.

The present invention well responds to the aforementioned characteristics thanks to a flow-breaking barrier incorporated within the inner section of the splash guard and made with a predetermined geometric sequence of higher and lower columns.

An object of the present invention is to meet the certification requirements for heavy vehicles mudguards, whereby the energy of the liquid thrown up by the tyres is absorbed in an amount higher than 70%, by using a pre-determined dimensional parameter which affects the nature and geometry of the flow-breaking barrier placed within the inner section of the splash guard.

Another object of the present invention is the capacity to contain the liquids thrown up to the side of the splash guard, thanks to the curved profiles placed at the lateral ends of the splash guard, which are always determined according to a single dimensional parameter.

A further object of the present invention is the capability to mount it on a mudguard with ease and without the aid of conventional connecting means. This is achieved by the use of resilient profiles and hooks placed at one end of the splash guard, which engage elastically and by simple manual manipulation can be attached to the corresponding parts of the mudguard.

A further advantage of the present invention is that its structure is designed to adhere perfectly to the mudguard, without gaps, in order to avoid the formation of undesirable concentrations of deposits of various types, including ice, which would form in the area of separation of the mudguard from the splash guard.

Further objects, advantages and features of the splash guard for heavy vehicles mudguard will become more apparent from the following description when taken in connection with the accompanying drawings, which show, for purposes of illustration and not limitation, the preferred embodiment, in accordance with the present invention:
Fig. 1 is an isometric view of the splash guard;
Fig. 2 is an isometric view of the splash guard with a detail of the flow-breaking barrier;
Figure 3 shows a detail of the flow-breaking barrier where the interaxle spacing of the short and tall columns is esteemed, as a function of the dimensional parameter A;
Fig. 4 shows a partial section of the splash guard, demonstrating how the dimensions of the curved profiles are dependent on the dimensional parameter A;

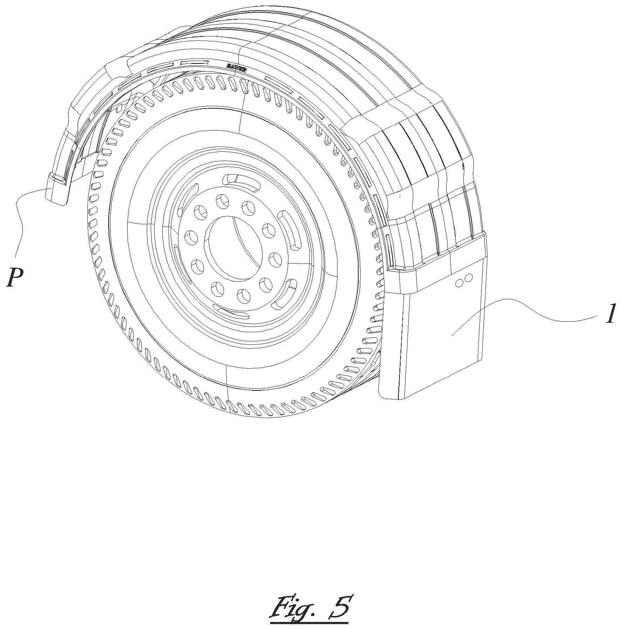

Fig. 5 is a view of the splash guard fitted on a heavy vehicle mudguard.

The attached figures show the splash guard of heavy vehicles mudguards, hereinafter referred to as splash guard 1, formed of an outer almost flat bulkhead 2 and of a sliding, slightly undulating flap 3. The outer bulkhead 2 is provided, at its lateral ends, with curved profiles 21 provided with rounded fins 22, at their ends facing the flap 3. The fins 22 of the outer bulkhead 2 are inserted into the lateral ends of the mudguard P, thereby ensuring correct alignment. The flap 3 to be inserted consists of a first short step 31 and a second undulating step 32. The first short step 31 is provided with a series of longitudinal slots 311 suitable for receiving corresponding profiles cut into the inner portion of the end of a mudguard P.

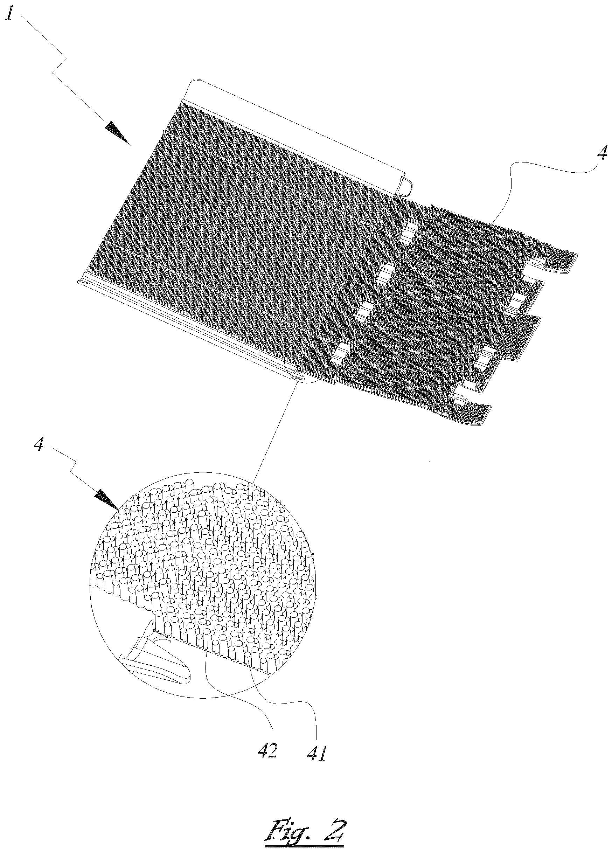

The undulating step 32 is provided, at its end, with a pair of lateral projections 322 situated in the central position, a central projection 323, all of which are tapered outwards, gradually reducing their thickness. The lateral projections 322 and the central projection 323 ensure a comfortable insertion and alignment within the corresponding internal components of the mudguard P, suitable for the elastic binding of the splash guard 1. The undulating step 32 is provided, at its end and in a central position, with a pair of longitudinal slots 321 suitable for receiving corresponding profiles cut into the inner portion of the mudguard P. As illustrated in Figure 2, the splash guard 1 is entirely covered, in its inner tyre-facing section, by a prominent flow-breaking barrier 4 consisting of a defined and systematic arrangement of short columns 41 and tall columns 42.

Both the short columns 41 and the tall columns 42 exhibit a truncated conical shape.

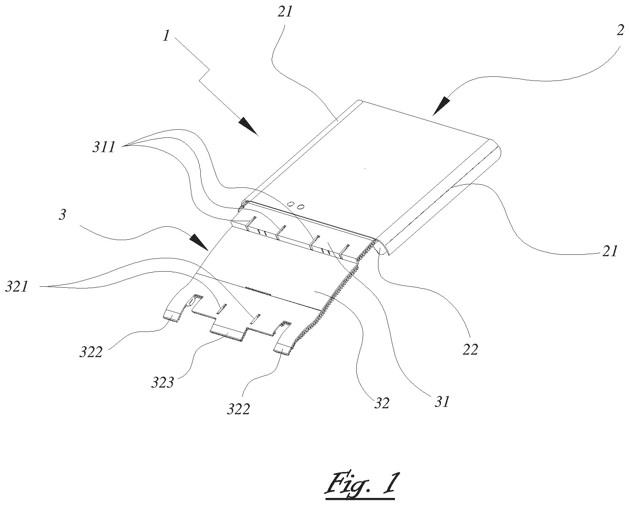

According to the present invention, the dimensional geometry of the splash guard 1 is determined by a single dimensional parameter A, which determines both the geometry of the curved profiles 21 (Figure 1) and the extent and density of the short and tall columns 41, 42 (Figure 2), the latter, as previously described, competing to form said flow-breaking barrier 4 of the splash guard 1.

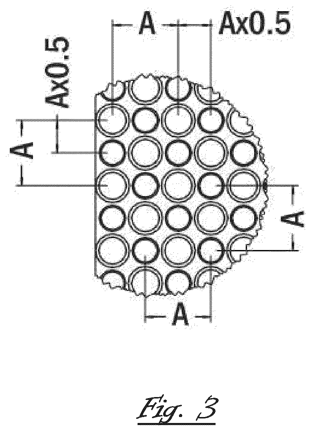

As illustrated in Figure 3, a dimensional parameter A is defined as equal to the interaxle spacing between a pair of short columns 41 which are, in turn, equal to the interaxle spacing between a pair of tall columns 42. It follows that the interaxle spacing value, taken in the longitudinal or latitudinal direction, between any pair of adjacent columns 41, 42 which are different from each other, is equal to A/2. According to the present invention, the heights of the columns 41, 42 are as follows: for a short column 41, the value is A x 0.8; for a tall column 42, the value is A x 1.7. With regard to the taper ratio of the columns 41, 42, a consequence of their truncated conical geometry, it can be observed that the major base of a short column 41 has a value of A x 0.4 and the minor base of a value of A x 0.3, whereas the major base of a tall column 42 has a value of A x 0.5 and the minor base of a value of A x 0.4.

The geometry of the curved profiles 21 is also dependent on the dimensional parameter A, for the purpose of determining the containment volume created in the inner part of the splash guard 1 by said curved profiles 21 with the flow-breaking barrier 4.

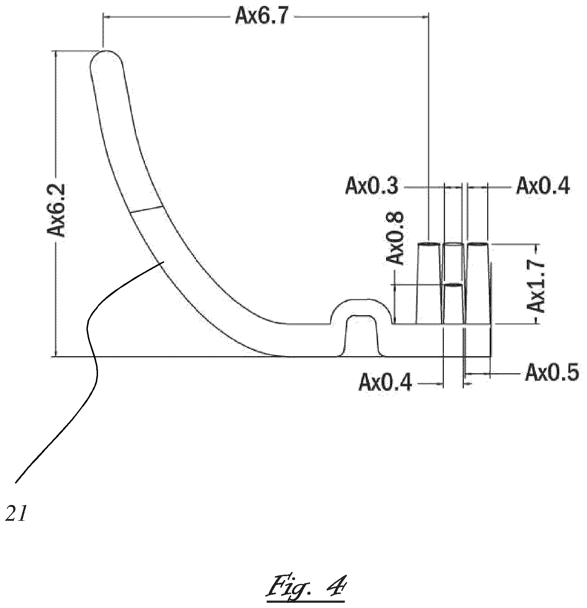

According to the present invention, and as illustrated in the section of Figure 4, the geometry of the curved profile 21 is characterized by a height of A x 6.2 and a width of A x 6.7.

## Claims

1. Splash guard (1) for heavy vehicles mudguard **characterized by** an outer flat bulkhead (2) whose lateral ends have curved profiles (21), by a flap to be inserted (3) and by a protruding flow-breaking barrier (4), said flow-breaking barrier (4) made with a predetermined sequence of short columns (41) and tall columns (42), and located within the inner section of the splash guard (1).

2. Splash guard (1) for heavy vehicles mudguard according to claim 1, **characterized in that** the flap to be inserted (3) is slightly undulating and is formed of a first short step (31) and a second undulating step (32).

3. Splash guard (1) for heavy vehicles mudguard according to the previous claims, **characterized in that** the short and tall columns (41, 42) are arranged in a checkerboard pattern.

4. Splash guard (1) for heavy vehicles mudguard according to the previous claims, **characterized in that** the interaxle spacing of any pair of short (41) or tall (42) adjacent columns is of a value equal to (A).

5. Splash guard (1) for heavy vehicles mudguard according to the previous claims, **characterized in that** the construction dimensions of the short and tall columns (41, 42) are determined as a function of a single dimensional parameter (A).

6. Splash guard (1) for heavy vehicles mudguard according to the previous claims, **characterized in that** the heights of the short columns (41) measure (A) x 0.8 and the heights of the tall columns (42) measure (A) x 1.7.

7. Splash guard (1) for heavy vehicles mudguard, according to claims from 1 to 5, **characterized in that** the larger base of the short columns (41) measures (A) x 0.4 and the smaller base is equal to (A) x 0.3, while the larger base of the tall columns (42) measures (A) x 0.5 and the smaller base is equal to (A) x 0.4.

8. Splash guard (1) for heavy vehicles mudguard according to one or more previous claims, **characterized in that** the construction dimensions of the curved profiles (21) are determined as a function of a single dimensional parameter (A).

9. Splash guard (1) for heavy vehicles mudguard according to one or more previous claims, **characterized in that** the cross-sectional geometry of a curved profile (21) has a height of (A) x 6.2 and a width of (A) x 6.72.

10. Splash guard (1) for heavy vehicles mudguard according to or more previous claims, **characterized in that** the undulating step (32) of the flap to be inserted (3) is equipped, in its terminal part, with a pair of lateral projections (322) and a central projection (323) tapered at their ends.

11. Splash guard (1) for heavy vehicles mudguard according to one or more previous claims, **characterized in that** the curved profiles (21) are equipped, in their terminal part facing the flap to be inserted (3), with rounded fins (22).
